# EUROPEAN PATENT APPLICATION

(11) **EP 1 568 426 A1**
(43) Date of publication of application: **31.08.2005**
(21) Application number: 03772799.7
(22) Date of filing: 17.11.2003
(51) Int. Cl.: B22F 1/00

(54) **Nb-Al ALLOY POWDER AND METHOD FOR ELECTROLYTIC CAPACITOR AND METHOD FOR PREPARATION THEREOF, AND ELECTROLYTIC CAPACITOR**

(30) Priority: 18.11.2002 JP 2002333988; 18.11.2002 JP 2002333989
(71) Applicant: CBMM Asia Co., Ltd., Tokyo 107-0052 (JP)
(72) Inventor: Imagumbai, Masana, CBMM ASIA CO., LTD., Minato-ku, Tokyo 107-0052 (JP)
(74) Representative: Vossius & Partner
(86) International application number: PCT/JP2003/014556
(87) International publication number: WO 2004/045794

(57) **Abstract**

The present invention provides an Nb-Al alloy powder for electrolytic capacitors. The powder is useful in manufacturing a component of an electrolytic capacitor which has a high capacitance and dielectric constant and which includes stable dielectric layers. The powder includes particles, which are covered with dielectric layers when the powder is processed into an anode of an electrolytic capacitor. The particles have dendritic microstructures principally containing NbAl₃, Nb₂Al, Nb₃Al, or Nb and matrix containing Al or eutectic structures containing at least two selected from the group consisting of NbAl₃, Nb₂Al, Nb₃Al, and Nb. The eutectic structures or the matrix surround the dendritic microstructures.

## Description

### Technical Field

The present invention relates to an Nb-Al alloy powder for electrolytic capacitors and an electrolytic capacitor manufactured using such a powder.

### Background Art

In recent years, in order to manufacture electronic devices, capacitors having the following advantages have been demanded: small size, high capacitance, reasonable price, and stable supply. To such capacitors are usually prepared anodes including sintered bodies made from a tantalum powder because the capacitors of tantalum powder are relatively compact and have a high capacitance and superb performance as capacitors. However, the tantalum capacitors are highly expensive and users are unsure about the stable supply thereof. In particular, an increase in capacitance leads to an increase in the amount of tantalum contained in the capacitors. Therefore, a new material, other than tantalum, for capacitor electrodes has been recently demanded.

In order to achieve compact high-capacitance electrolytic capacitors containing a metal material other than tantalum, numerous attempts have been made to develop capacitor anodes containing niobium (Japanese Unexamined Patent Application Publication No. 55-157226 or other documents). This is because niobium oxide has a higher dielectric constant than that of tantalum oxide and niobium is inexpensive and readily available. Japanese Unexamined Patent Application Publication Nos. 60-66806, 60-216530, and 1-124212 disclose anodes made from a niobium-aluminum alloy powder or anodes including sheets of niobium-aluminum alloy foil. An electrolytic capacitor including an anode made from a niobium powder as disclosed in any one of the above documents has problems in that dielectric layers containing niobium oxide are thermally unstable and this capacitor reflow-soldered has inferior leakage current properties as compared to the tantalum capacitors. The anodes made of the niobium-aluminum alloy as disclosed in Japanese Unexamined Patent Application Publication No. 60-66806 and the like have a problem in that oxide films derived from the niobium-aluminum alloy have an insufficient dielectric constant although the films have high thermal stability. This is because the niobium content of the alloy is insufficient. Since the alloy sheets are produced by a rapid quenching process and then directly processed into the anodes, the anodes further have a problem in that the anodes are inferior in specific surface area as compared to those made from a tantalum powder or a niobium powder; hence, the anodes are unsuitable for high-capacitance capacitors. That is, the anodes are unsuitable for practical use.

The present invention has been made to solve the above problems. It is an object of the present invention to provide an Nb-Al alloy powder for manufacturing electrolytic capacitors which include stable dielectric layers and which have a high capacitance and breaking voltage.

When the Nb-Al alloy powder has an increased Nb content and further contains a single third element or a plurality of third elements in addition to Nb and Al, electrolytic capacitors which include dielectric layers containing an oxide with a high dielectric constant and which have a high capacitance and breaking voltage can be manufactured using the powder.

Furthermore, it is another object of the present invention to provide an electrolytic capacitor manufactured using the Nb-Al alloy powder.

### Disclosure of Invention

In order to achieve the above objects, the present invention provides a powder, capacitor, and method described below.

A Nb-Al alloy powder for electrolytic capacitors according to the present invention includes particles having dendritic microstructures and a matrix. The dendritic microstructures principally contain NbAl₃, Nb₂Al, Nb₃Al, or Nb. The matrix contains eutectic structures or Al. The eutectic structures contain at least two selected from the group consisting of NbAl₃, Nb₂Al, Nb₃Al, and Nb. The matrix surrounds the dendritic microstructures. The particles that are processed to be used for an electrolytic capacitor anode are covered with dielectric layers when the powder is processed into an anode of an electrolytic capacitor.

If the particles are processed so as to have a fine size, the Nb-Al alloy powder is useful in manufacturing capacitors having a higher breaking voltage and capacitance than those of capacitors including anodes prepared by sintering a powder including primary tantalum particles.

The dielectric layers of the Nb-Al alloy powder contain niobium oxide and aluminum oxide; hence, the dielectric layers have a high dielectric constant and low leakage current and are more stable than those containing niobium oxide only.

The Nb-Al alloy powder has an advantage in that the particles can be readily rendered porous by partly or entirely removing the matrix to allow the dendritic microstructure to occupy the most part of the surface of the particles. If a capacitor anode is made from the porous particles by removing the matrix as described above, the anode has a large surface area and includes dielectric layers having a high breaking voltage; hence, an electrolytic capacitor composed of such anode exhibits high performance.

In the Nb-Al alloy powder, the Nb-Al alloy may have an aluminum content of 46% to 90% on a mass basis, the dendritic microstructures principally contain NbAl₃, and the matrix contains Al. The matrix surrounds the dendritic microstructures. The surface area of the Nb-Al alloy powder can be increased, because the matrix can be readily removed by an etching process.

In the Nb-Al alloy powder, the Nb-Al alloy has an aluminum content of 27% and more and less than 46% on a mass basis, the dendritic microstructures principally contain NbAl₃, and the eutectic matrix contains NbAl₃ and Nb₂Al. The matrix surrounds the dendritic microstructures.

In the Nb-Al alloy powder, the Nb-Al alloy may have an aluminum content of 14% and more and less than 27% on a mass basis, the dendritic microstructures principally contain Nb₂Al, and the eutectic matrix contains NbAl₃ and Nb₂Al. The matrix surrounds the dendritic microstructures.

In the Nb-Al alloy powder, the Nb-Al alloy may have an aluminum content of 10% and more and less than 14% on a mass basis, the dendritic microstructures principally contain Nb₃Al, and the matrix contains eutectic microstructure containing Nb₃Al and Nb₂Al. The matrix surrounds the dendritic microstructures.

In the Nb-Al alloy powder, the Nb-Al alloy may have an aluminum content of less than 10% on a mass basis, the dendritic microstructures principally contain Nb, and the eutectic matrix contains Nb₃Al and Nb. The matrix surrounds the dendritic microstructures.

In the Nb-Al alloy powder, the Nb-Al alloy may contain at least one element selected from the group consisting of tantalum, titanium, hafnium, zirconium, molybdenum, barium, strontium, and boron. When the Nb-Al alloy contains at least one of those elements, the dielectric layers formed on the particle surfaces, hence such an electrolytic capacitor as prepared by processing the powder has an extremely high dielectric constant.

In the Nb-Al alloy powder, the element content is preferably 3% and less on a mass basis. When the element content is more than 3% on a mass basis, oxide films present on an anode made from the powder have unstable dielectric properties and this causes an increase in leakage current under high breaking voltage conditions; that is, disadvantages arise.

In the Nb-Al alloy powder, the Nb-Al alloy preferably contains 100 ppm and less of an iron impurity. When the iron impurity content is more than 100 ppm, the dielectric layers have a low breaking voltage. This is not preferable.

In the Nb-Al alloy powder, the dendritic microstructures preferably have a dendrite arm spacing (width) of 3 µm and less. According to such a configuration, the surface of the particles can be increased, whereby high-capacitance electrolytic capacitors can be manufactured using the particles. In particular, if the particles are rendered porous by removing the matrix by an etching process, the resulting particles have a particularly large surface area.

In the Nb-Al alloy powder, the particles preferably have a bulk density of 2.8 to 5.0 g/cm³.

In the Nb-Al alloy powder, the particles preferably have a specific surface area of 1 to 10 m²/g.

An electrolytic capacitor according to the present invention includes an anode prepared by sintering the powder described above. The electrolytic capacitor having such a configuration is compact and has a high capacitance.

A method for manufacturing an Nb-Al alloy powder includes a step of quenching a molten Nb-Al alloy having an aluminum content of 27% to 90% on a mass basis to form particles or thin sheets, both having dendritic microstructures with dendrite arm spacing of 3 µm and less. The powder includes particles, which are covered with dielectric layers when the powder is processed into an anode of an electrolytic capacitor.

According to the above method, the surface area of the particles can be readily increased by etching the particles because the matrix or dendritic phase regions present in the particles are preferentially etched off and the dendritic microstructures are allowed to remain in the particles, which are thereby rendered porous. In the Nb-Al alloy powder, the particles are fine and have a large surface area. If dielectric layers containing an oxide are formed on the particles, the dielectric layers have a high dielectric constant. Therefore, compact electrolytic capacitors having a high capacitance can be manufactured using the powder.

In the method, the molten Nb-Al alloy is preferably quenched at a rate of 10³°C/sec and higher. When the quenching rate is such a value, the dendritic microstructures can be efficiently formed in the particles or the thin sheets. Therefore, the particles obtained from the particles (rapidly quenched powder) or the thin sheets have a large surface area. The quenching rate is more preferably 10⁴°C/sec and more.

The method may further include a step of pulverizing the rapidly quenched powder or the thin sheets.

### Best Mode for Carrying Out the Invention

The Nb-Al alloy powder for electrolytic capacitors according to the present invention as described above is characterized in that this powder includes particles which have dendritic microstructures principally containing Nb and/or Nb-Al intermetallic compound and which have a matrix containing another Nb-Al intermetallic phase. The dendritic microstructures have branched extensions and the matrix surrounds the dendritic microstructures. Since the particles have such crystal structures, the size of the particles can be greatly reduced readily. That is, the particle size of this powder is much less than the size of primary particles included in a tantalum powder for manufacturing known electrolytic capacitors. A sintered body made of the Nb-Al alloy powder therefore has a large surface area. If the Nb-Al alloy powder is used to manufacture electrolytic capacitors, dielectric layers which cover the large surface area with high dielectric constant can be formed on the particles. Therefore, the electrolytic capacitors obtained are compact and have a high capacitance.

In the powder of the present invention, whose dendritic phase is principally NbAl₃ dendritic microstructures, and whose matrix contains Nb₂Al or Al, the dielectric layer formed on the particles contains niobium oxide and aluminum oxide. The matrix surrounds the dendritic microstructures. When an anode of an electrolytic capacitor is made from this powder, the capacitor has a higher dielectric constant than that of an aluminum capacitor. Also the dielectric layers are greatly superior in stability as compared to those containing niobium oxide only. If this powder is used to manufacture electrolytic capacitors, the electrolytic capacitors obtained are compact and have a high capacitance.

Nb is more inexpensive as compared to Ta usually used to manufacture current electrolytic capacitors. Therefore, the Nb-Al alloy powder has an advantage in that a type of electrolytic capacitor having substantially the same performance as that of Ta capacitors can be manufactured at low cost.

An example of a method for manufacturing the Nb-Al alloy powder according to the present invention will now be described.
(1) In order to manufacture the Nb-Al alloy powder, a molten alloy having a predetermined Nb content and Al content is prepared. In this method, the composition of the alloy may be arbitrarily varied.
(2) The molten alloy is rapidly quenched and thereby formed into powders by a gas atomizing process or an RSR process (rotating electrode process) or formed into a thin sheet by a melt-spinning process. The powders or the sheets are then pulverized with a ball mill or a jet mill, whereby the Nb-Al alloy powder is obtained. If the powders or the sheets prepared in the rapid quenching step are hydrogenated in a hydrogenation step and then pulverized, a finer alloy powder can be obtained.

In the method of the present invention, if any one of the above processes is used, manufacturing conditions are preferably set such that the quenching rate is 10³°C/sec and higher, and more preferably 10⁴°C/sec and higher. When the quenching rate is as described above, the dendritic microstructures can be efficiently formed in the particles or the sheets. This allows the particles to have a large surface area.

According to the above procedure, the Nb-Al alloy powder of the present invention can be manufactured. This powder includes particles which have dendritic microstructures principally containing intermetallic compound and which have a matrix containing another intermetallic compound and the matrix surrounds the dendritic microstructures.

When the Nb-Al alloy powder has an aluminum content of 27% and more on a mass basis, the surface of the particles can be increased by etching the particles; hence, high-capacitance capacitors can be manufactured using the resulting particles. In particular, the matrix surrounding the dendritic microstructures principally containing NbAl₃ are partly or entirely removed by an etching process, whereby the dendritic microstructures acting as skeletal structures are allowed to remain and the particles are therefore rendered porous.

When the matrix of the particles contains, for example, Al, the matrix can be readily etched off; that is, the matrix can be selectively removed with an ordinary etching solution containing hydrochloric acid or nitric acid, whereby the particles are rendered porous. When the particles have eutectic structures containing NbAl₃ and Nb₂Al in addition to the dendritic microstructures principally containing NbAl₃, the surface area of the particles can be increased by etching off portions containing NbAl₃ with hydrofluoric acid or nitric acid; hence, the powder is useful in manufacturing high-capacitance capacitors.

### [EXAMPLES]

Examples of the present invention will now be described.

Table 1 shows Nb-Al alloy powders, prepared in Example 1, including particles having an Al content of 20% to 75% on a mass basis. The powders referred to as Samples 3 and 6 included particles having an Al content of 46% to 90% on a mass basis and the particles had mixed structure of Al matrix and NbAl₃ dendritic microstructures as primary crystal; hence, the surface area of the particles were greatly increased by etching the particles with an etching solution containing hydrochloric acid or nitric acid. The etched particles were processed into sintered bodies, which were subjected to anodizing, whereby the following elements were obtained: elements having a CV value and breaking voltage greater than those of elements made from a tantalum powder.

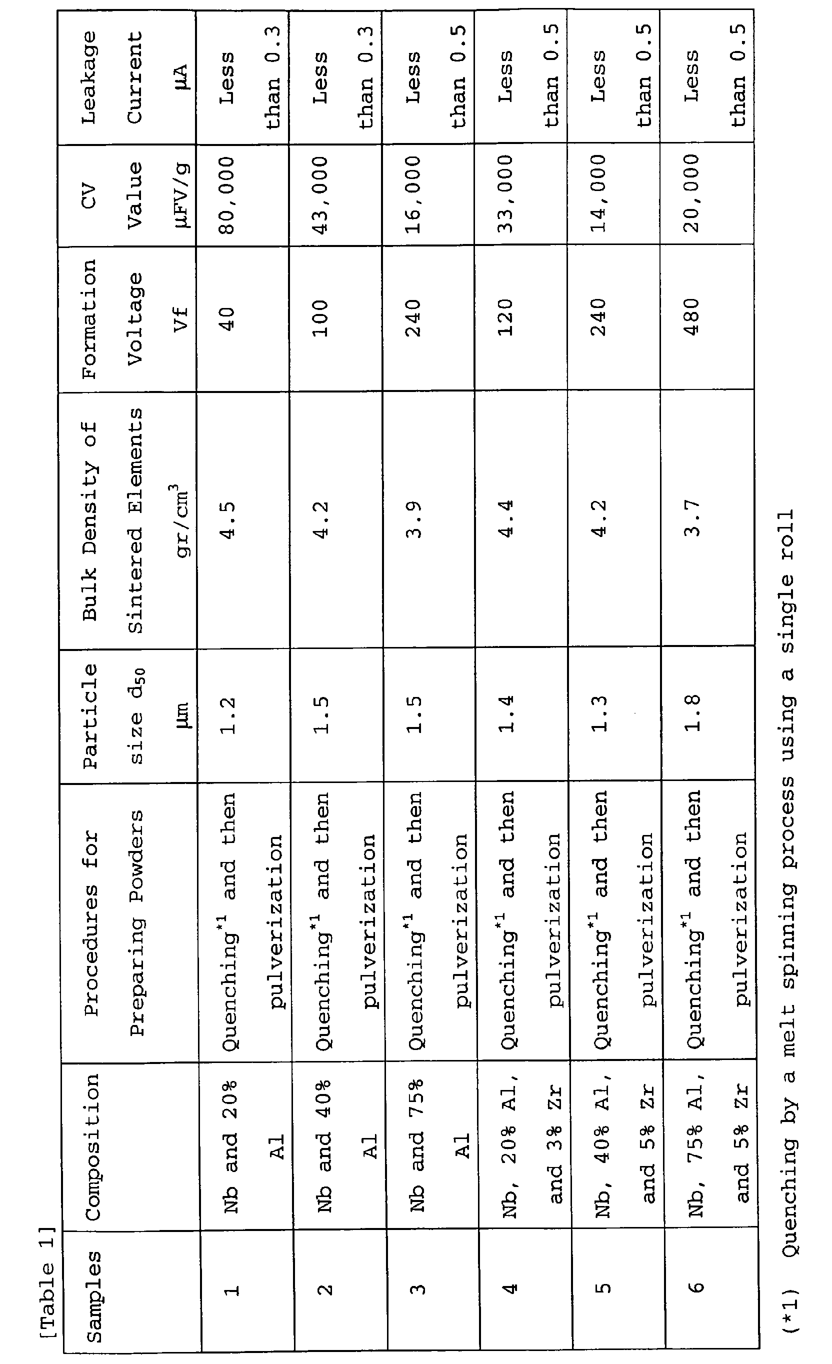

Table 2 shows powders, prepared in Example 2, including particles having an Al content of 27% and more and less than 46% on a mass basis. The powders having the above content were prepared by atomization under rapid solidification conditions and the particles had mixed structure of NbAl₃-Nb₂Al eutectic structures and NbAl₃ dendritic microstructures as primary crystal. Portions containing NbAl₃ were etched off with a solution containing hydrofluoric acid and nitric acid, whereby the surface area of the particles was greatly increased. The resulting particles were processed into sintered bodies, which were subjected to anodizing, whereby the following elements were obtained: elements having a CV value and breaking voltage greater than those of elements made from a tantalum powder.

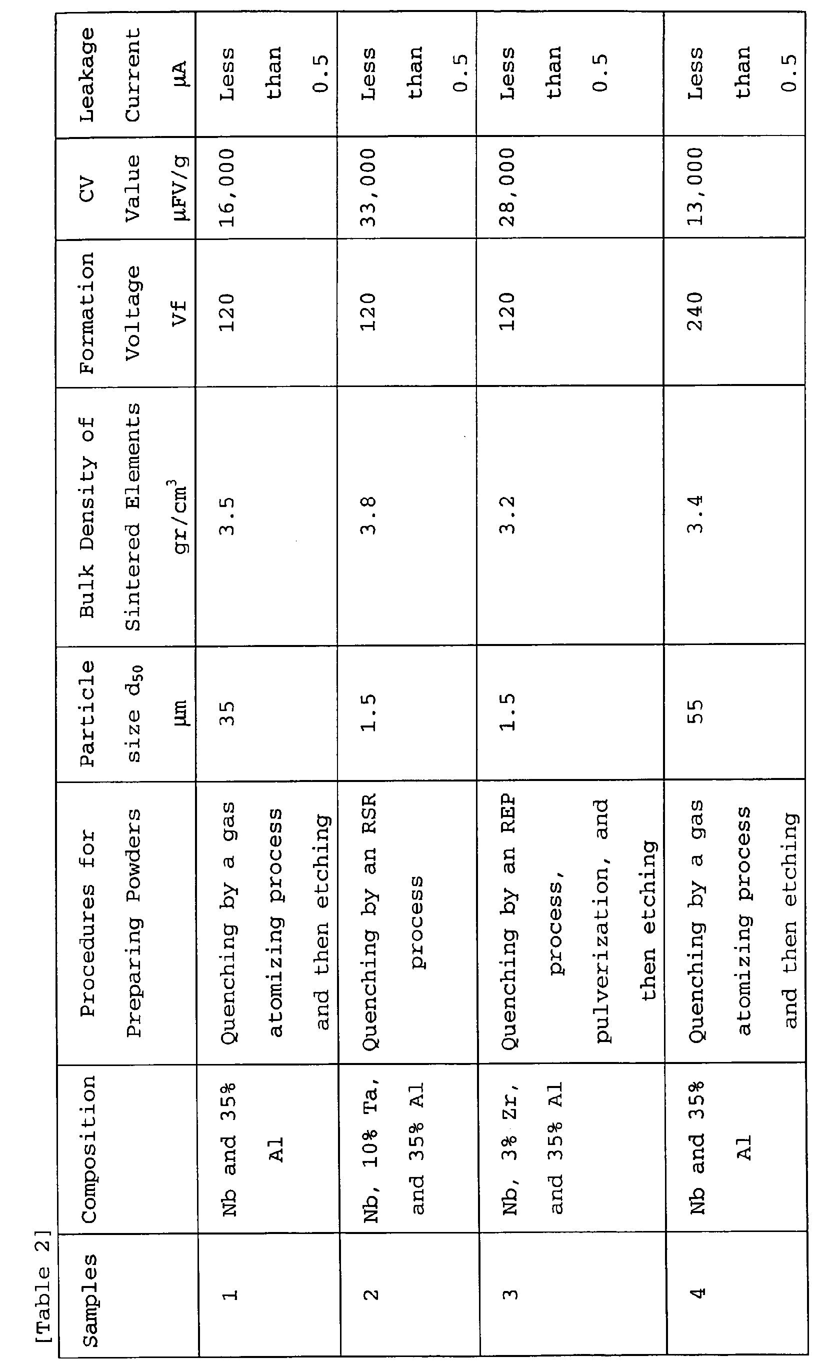

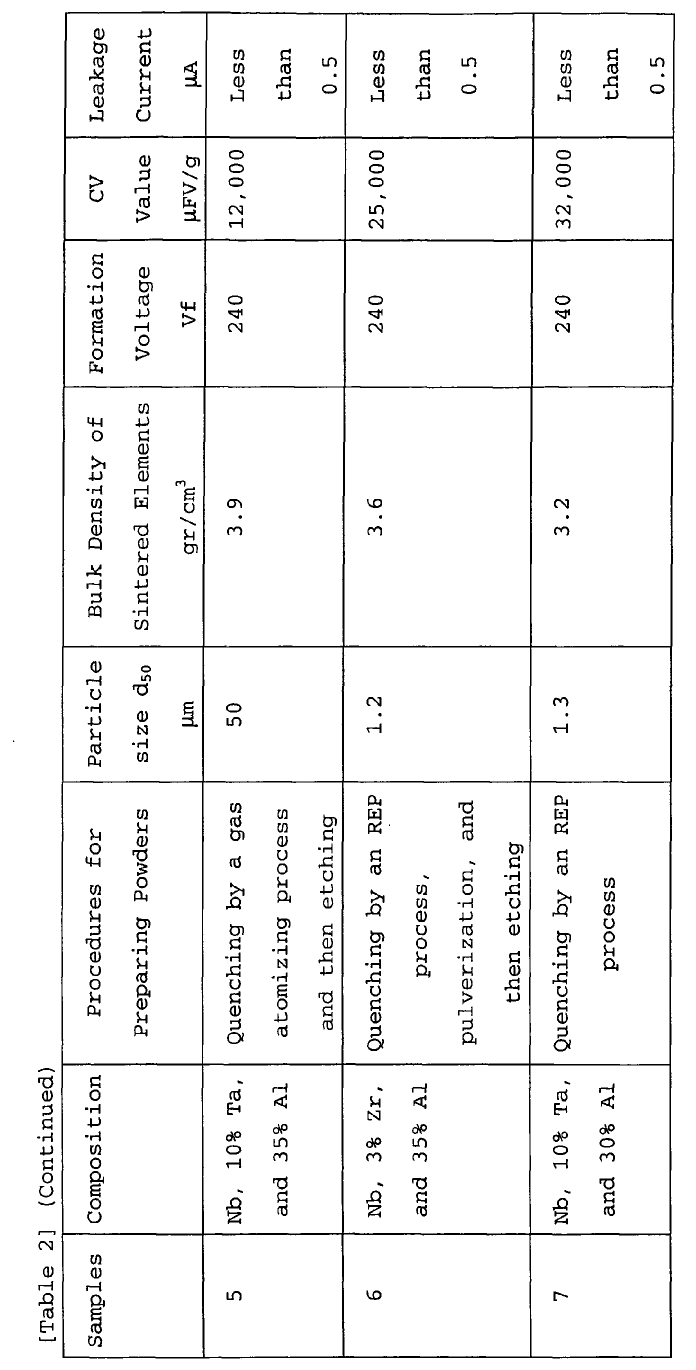

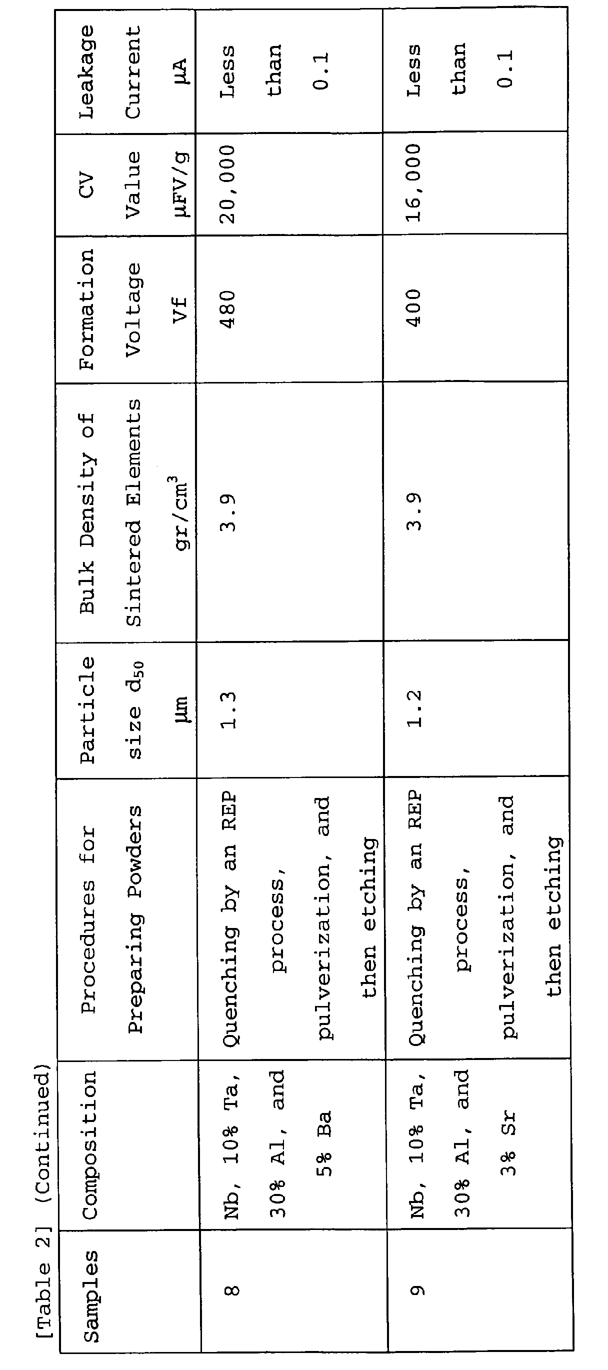

Table 3 shows powders, prepared in Example 3, including particles having an Al content of 14% and more and less than 27% on a mass basis. The powders having the above content were prepared by atomization under rapid solidification conditions and the particles had mixed structure of NbAl₃-Nb₂Al eutectic structures and Nb₂Al dendritic microstructures as primary crystal. The Nb₂Al dendritic microstructures were etched off with a solution containing hydrofluoric acid and nitric acid, whereby the surface area of the particles was greatly increased. The resulting particles were processed into sintered bodies, which were subjected to anodizing, whereby the following elements were obtained: elements having a CV value and breaking voltage greater than those of elements made from a tantalum powder.

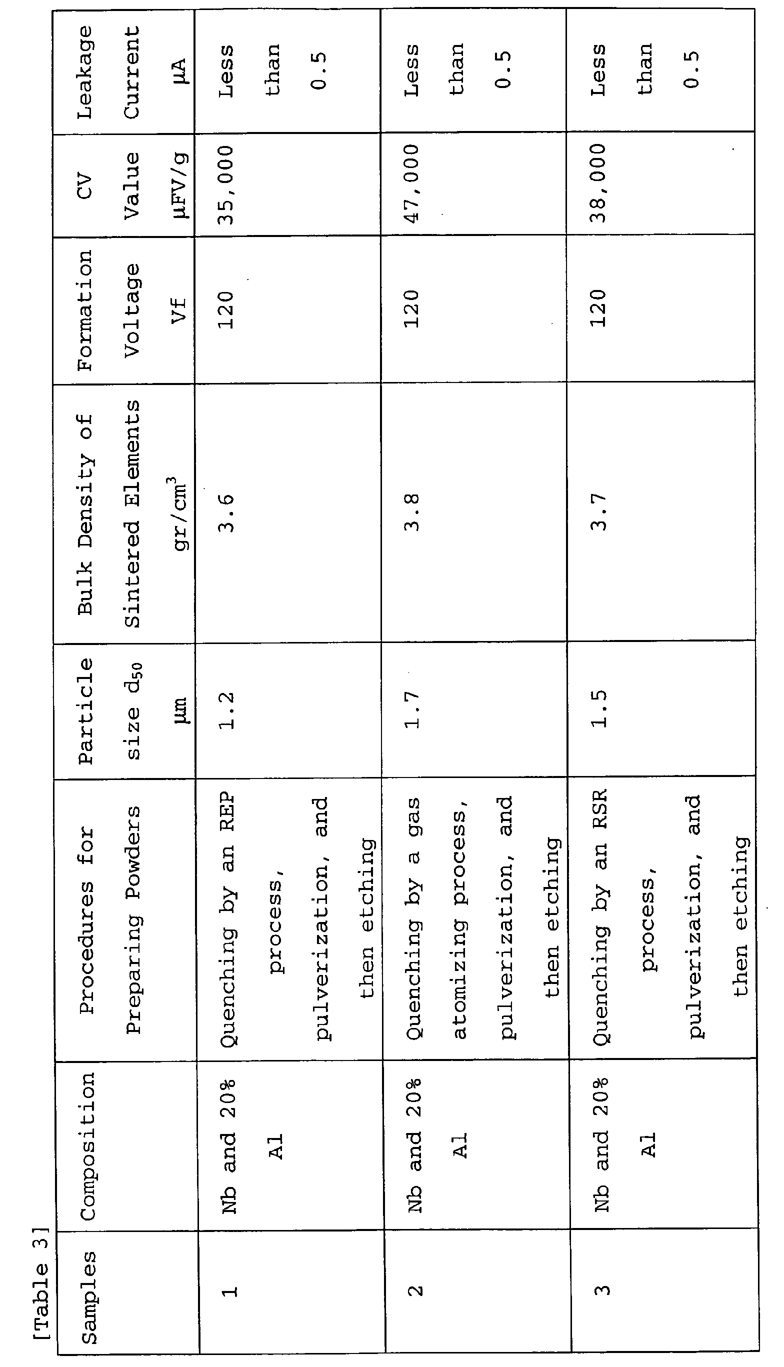

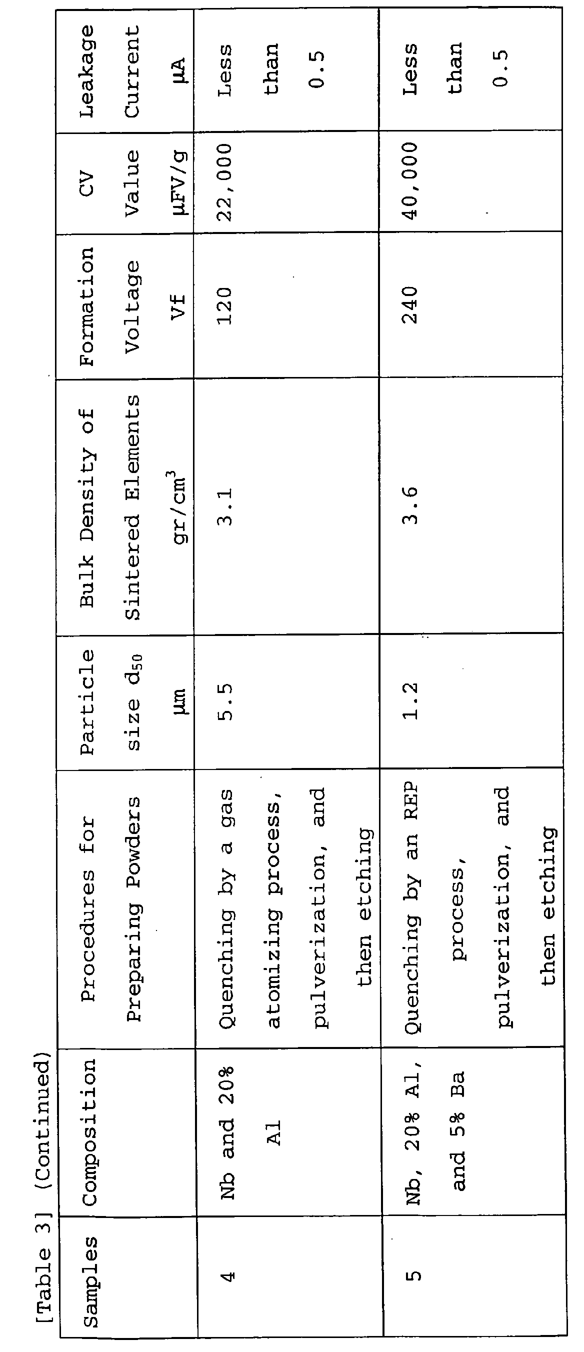

Table 4 shows powders, prepared in Example 4, including particles having an Al content of 10% and more and less than 14% on a mass basis. The powders having the above content were prepared by atomization under rapid solidification conditions and the particles had mixed structure of Nb₃Al-Nb₂Al eutectic structures and Nb₃Al dendritic microstructures as primary crystal. The particles were allowed to absorb hydrogen and then pulverized into fine particles, which were processed into sintered elements having a significantly large surface area. The sintered elements were subjected to anodizing. The resulting sintered elements had a CV value and breaking voltage greater than those of elements made from a tantalum powder.

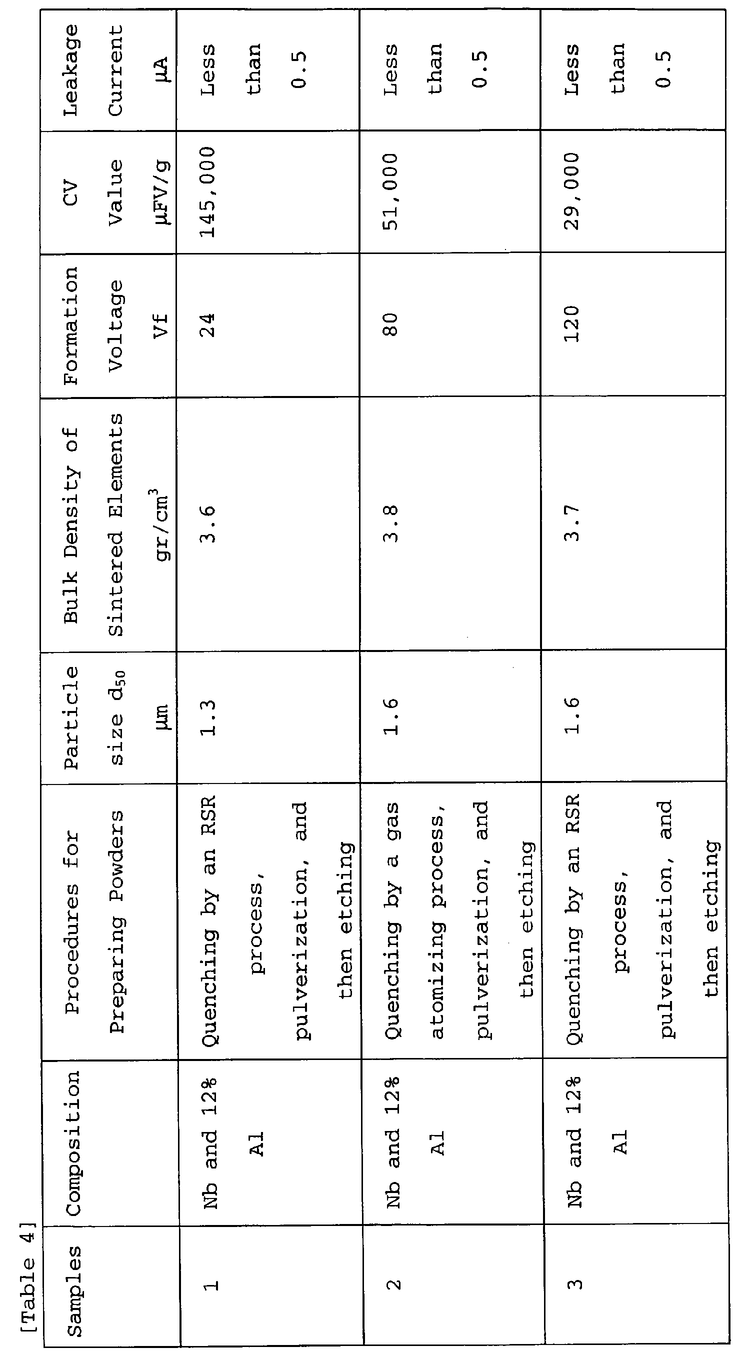

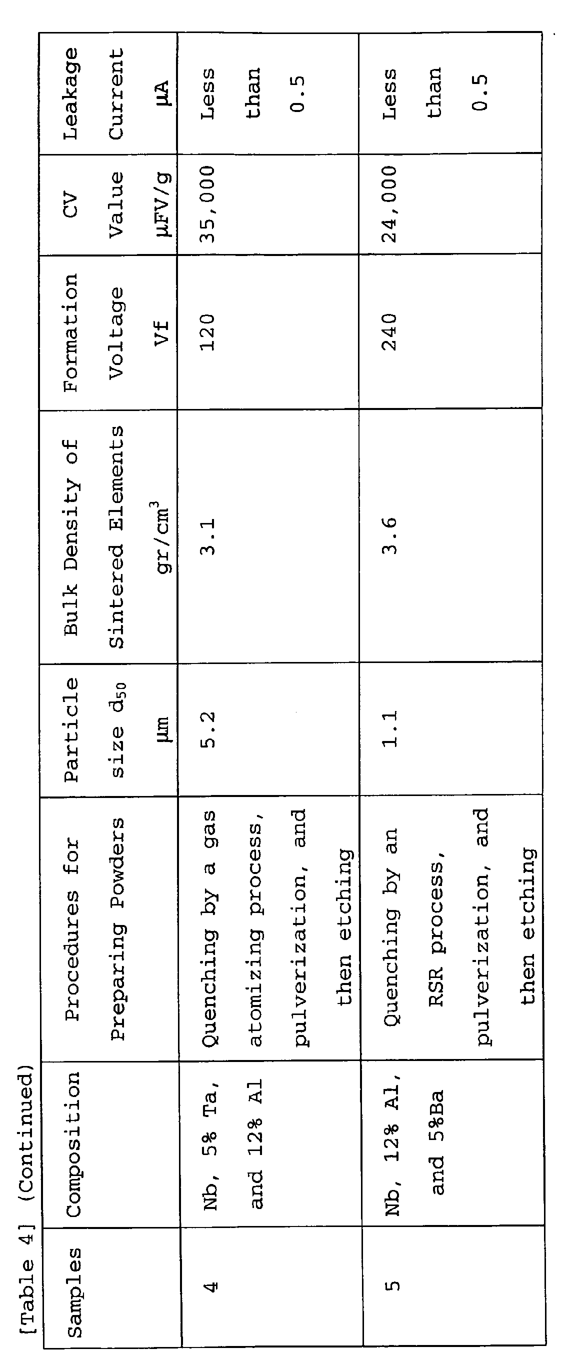

Table 5 shows powders, prepared in Example 5, including particles having an Al content of less than 10% on a mass basis. The powders having the above content were prepared by atomization under rapid solidification conditions and the particles had mixed structure of Nb₃Al-Nb eutectic structures and Nb dendritic microstructures as primary crystal. The particles were allowed to adsorb hydrogen and then pulverized into fine particles, which were processed into sintered elements having a significantly large surface area. The sintered elements were subjected to anodizing. The resulting sintered elements had a CV value and breaking voltage greater than those of elements made from a tantalum powder.

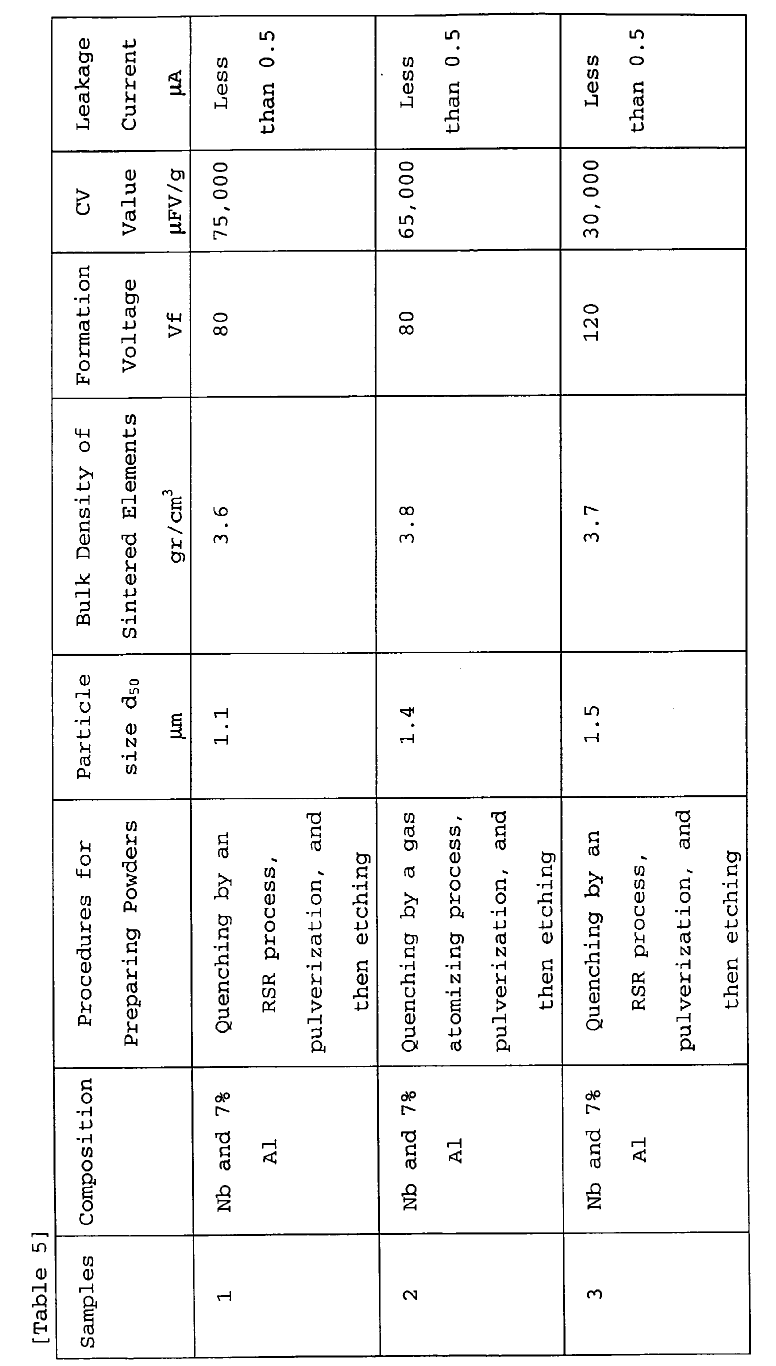

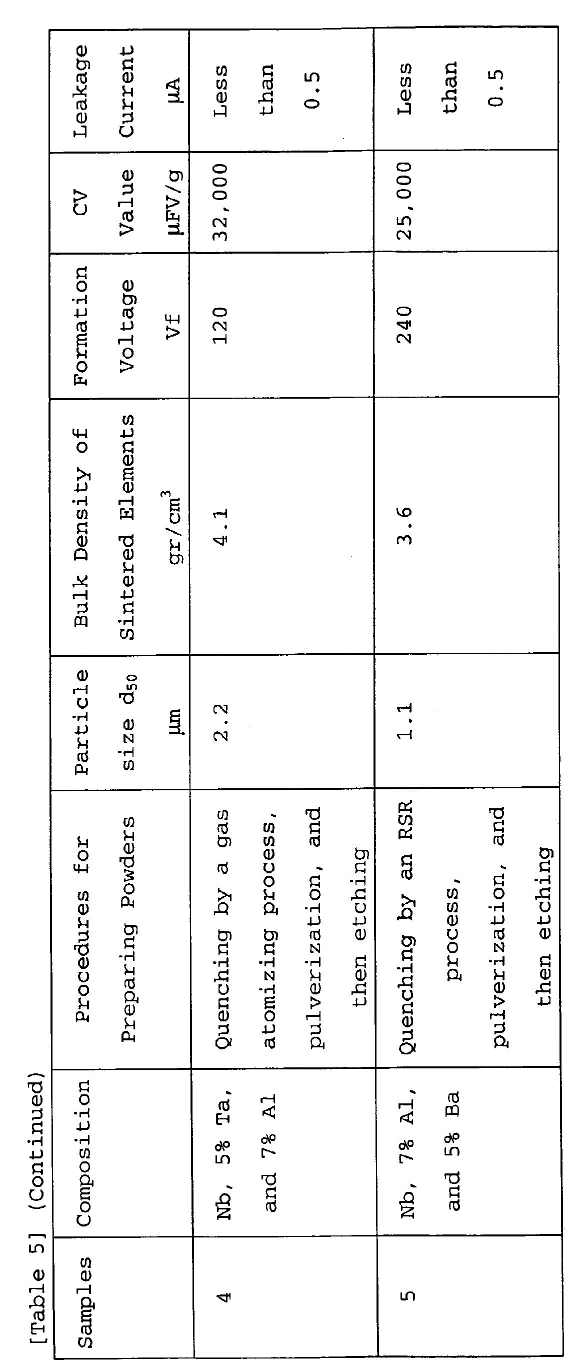

### Industrial Applicability

As described above in detail, the Nb-Al alloy powder according to the present invention includes the particles, which are covered with the dielectric layers when the powder is processed into an anode of an electrolytic capacitor. The particles have the dendritic microstructures principally containing NbAl₃, Nb₂Al, Nb₃Al, or Nb and the matrix containing Al or the eutectic structures containing two selected from the group consisting of NbAl₃, Nb₂Al, Nb₃Al, and Nb. The matrix surrounds the dendritic microstructures. The particles therefore are extremely fine. Since the dielectric layers on the particles contain niobium oxide and aluminum oxide, the dielectric layers have a high dielectric constant and low leakage current and are superior in stability as compared to those containing niobium oxide only. Therefore, the powder is extremely useful in manufacturing a sintered body, having a breaking voltage greater than that of a known tantalum sintered body, for manufacturing a high-capacitance electrolytic capacitor.

If the matrix is partly removed by etching the particles, the resulting particles are porous and have a greatly increased surface area because the dendritic microstructures acting as skeletal structures remain. This leads to an increase in the capacitance of electrolytic capacitors.

## Claims

1. An Nb-Al alloy powder for electrolytic capacitors, comprising particles having dendritic microstructures principally containing NbAl₃, Nb₂Al, Nb₃Al, or Nb and a matrix containing Al or eutectic structures containing two selected from the group consisting of NbAl₃, Nb₂Al, Nb₃Al, and Nb, the particles being covered with dielectric layers when the powder is processed into an anode of an electrolytic capacitor, the matrix surrounding the dendritic microstructures.

2. The powder according to Claim 1, wherein the Nb-Al alloy has an aluminum content of 46% to 90% on a mass basis, the dendritic microstructures principally contain NbAl₃, and the matrix contains Al.

3. The powder according to Claim 1, wherein the Nb-Al alloy has an aluminum content of 27% and more, and less than 46% on a mass basis, the dendritic microstructures principally contain NbAl₃, and the eutectic matrix contains NbAl₃ and Nb₂Al.

4. The powder according to Claim 1, wherein the Mb-Al alloy has an aluminum content of 14% and more, and less than 27% on a mass basis, the dendritic microstructures principally contain Nb₂Al, and the eutectic matrix contains NbAl₃ and Nb₂Al.

5. The powder according to Claim 1, wherein the Nb-Al alloy has an aluminum content of 10% and more, and less than 14% on a mass basis, the dendritic microstructures principally contain Nb₃Al, and the eutectic matrix contains Nb₃Al and Nb₂Al.

6. The powder according to Claim 1, wherein the Nb-Al alloy has an aluminum content of 10% and less on a mass basis, the dendritic microstructures principally contain Nb, and the eutectic matrix contains Nb₃Al and Nb, or the matrix principally contains Nb₃Al.

7. The powder according to any one of Claims 1 to 6, wherein the Nb-Al alloy contains at least one element selected from the group consisting of tantalum, titanium, hafnium, zirconium, molybdenum, barium, strontium, and boron.

8. The powder according to Claim 7, wherein the element content is 3% and less on a mass basis.

9. The powder according to any one of Claims 1 to 6, wherein the Nb-Al alloy contains 100 ppm and less of an iron impurity.

10. The powder according to any one of Claims 1 to 9, wherein the dendritic microstructures have a width of 3 µm and less.

11. An electrolytic capacitor comprising an anode prepared by sintering the powder according to any one of Claims 1 to 10.

12. A method for manufacturing an Nb-Al alloy powder including particles that are covered with dielectric layers when the powder is processed into an anode of an electrolytic capacitor, the method comprising a step of quenching a molten Nb-Al alloy having an aluminum content of 27% to 90% on a mass basis to form particles or thin sheets having dendritic microstructures with dendrite arm spacing of 3 µm and less.

13. The method according to Claim 12, wherein the molten Nb-Al alloy is quenched at a rate of 10³°C/sec and more.

14. The method according to Claim 12 or 13 further comprising a step of pulverizing the thin sheets.
